# EUROPÄISCHE PATENTSCHRIFT

(11) **EP 1 126 996 B1**
(45) Veröffentlichungstag und Bekanntmachung des Hinweises auf die Patenterteilung: **20.11.2002**
(21) Anmeldenummer: 99960824.3
(22) Anmeldetag: 25.10.1999
(51) Int. Cl.: B60R 16/00

(54) **LENKSTOCKSCHALTER**
STEERING COLUMN SWITCH
INTERRUPTEUR SUR COLONNE DE DIRECTION

(30) Priorität: 04.11.1998 DE 19850796
(43) Veröffentlichungstag der Anmeldung: 29.08.2001
(73) Patentinhaber: Delphi Technologies Inc., Troy, MI 48007 (US)
(72) Erfinder: LENG, Peter, D-65428 Rüsselsheim (DE); JUNKER, Paul, D-55411 Bingen (DE)
(74) Vertreter: Becker, Bernd, Dipl.-Ing.
(86) Internationale Anmeldenummer: DE9903427
(87) Internationale Veröffentlichungsnummer: WO00026065

(56) Entgegenhaltungen:
- DE-A- 1 630 949
- DE-A- 19 607 668
- GB-A- 2 234 804

## Beschreibung

Die Erfindung bezieht sich auf einen Lenkstockschalter eines Kraftfahrzeuges mit einem Blinkerschalter, dessen Schalthebel zwei, Schaltkontaktbahnen beaufschlagende Schaltglieder für jeweils eine Fahrtrichtungsanzeige nach rechts bzw. nach links zugeordnet sind, und einem Warnlichtschalter mit einem Betätigungselement.

Lenkstockschalter sind üblicherweise der Lenksäule des Kraftfahrzeuges derart zugeordnet, daß der Lenkstockschalter radial zur Lenksäule an deren Mantelrohr angebracht ist, wodurch bei Betätigung des Lenkrades und damit der im Mantelrohr geführten Lenksäule der Lenkstockschalter gegenüber dem Lenkrad unbeweglich ist. Der Lenkstockschalter umfaßt häufig einen Blinkerschalter mit zwei Schaltgliedern für die beiden Fahrtrichtungsanzeigen und einen Warnlichtschalter zur Einschaltung der Warnblinkanlage mit einem als Druckknopf ausgebildeten Betätigungselement, das auf ein Schaltkontaktbahnen beaufschlagendes Schaltglied einwirkt. Somit werden die am Kraftfahrzeug vorhandenen Leuchten für die rechte und linke Fahrtrichtungsanzeige mittels des Blinkerschalters entsprechend getrennt und mittels des Warnlichtschalters gemeinsam geschaltet. Das erfordert jeweils eine separate, relativ aufwendige Ausbildung der Kontaktbahnen und Verkabelung des Blinkerschalters sowie des Warnlichtschalters, was kostenintensiv ist.

Eine besonders komplexe Schaltung ist erforderlich, wenn die heckseitigen Bremsleuchten eines Kraftfahrzeuges als Fahrtrichtungsanzeigen bzw. als Warnlichtanlage dienen und somit sowohl von dem Blinkerschalter als auch von dem Warnlichtschalter angesteuert werden, wobei im Falle der Ansteuerung gleichzeitig das Aufleuchten der Bremsleuchten bei Betätigung der Bremse verhindert werden muß. Zu diesem Zweck ist ein weiterer mit dem Blinkerschalter und dem Warnlichtschalter verbundener Schalter erforderlich, der den Bremslichtschalter deaktiviert.

Es ist Aufgabe der Erfindung, einen Lenkstockschalter der eingangs genannten Art zu schaffen, der bei einer geringen Anzahl von Bauteilen einfach im Aufbau und somit kostengünstig herstellbar ist.

Erfindungsgemäß wird die Aufgabe dadurch gelöst, daß das Betätigungselement des Warnlichtschalters bei dessen Betätigung mit den Schaltgliedern des Blinkerschalters zur gleichzeitigen Ansteuerung der rechten und linken Fahrtrichtungsanzeige mechanisch in Verbindung tritt.

Durch diese Maßnahme ist ein separates Schaltglied für den Warnlichtschalter nicht mehr erforderlich, wodurch ein einfacher sowie kompakter Aufbau des Lenkstockschalters bei gleichzeitiger Verringerung der elektrischen Verbindungen gegeben ist. Die Koppelung der Schaltglieder des Blinkerschalters mit dem Betätigungselement des Warnlichtschalters bewirkt bei einer Betätigung des Schalthebels des Blinkerschalters ein Blinken der entsprechenden Fahrtrichtungsanzeige und bei einer Betätigung des Betätigungselementes des Warnlichtschalters ein gleichzeitiges Blinken beider Fahrtrichtungsanzeigen.

Bevorzugt sind die rechte und die linke Fahrtrichtungsanzeige am Heck des Kraftfahrzeuges gleichzeitig als Bremsleuchten ausgebildet. Hierbei erfolgt die Ansteuerung der Bremsleuchten als Fahrtrichtungsanzeige von dem Blinkerschalter und als Warnlicht von dem Warnlichtschalter über die gemeinsamen Schaltglieder, was einen wesentlichen schaltungstechnischen Vorteil mitsichbringt. Die jeweils separat von dem Blinkerschalter und dem Warnlichtschalter bewirkte Deaktivierung des Bremslichtes bei gleichzeitiger Betätigung eines der beiden Schalter und der Bremse des Kraftfahrzeugs ist durch die gemeinsamen Schaltglieder realisiert.

Nach einer vorteilhaften Ausgestaltung der Erfindung erfolgt durch ein Verschwenken des Schalthebels des Blinkerschalters aus der "AUS"-Schaltstellung nach oben oder nach unten in eine Tip-Schaltstellung sowie eine nachfolgende Blinker-Schaltstellung ein lineares Verschieben des einen oder des anderen Schaltgliedes zur Ansteuerung der rechten oder der linken Fahrtrichtungsanzeige. Jedes Schaltglied erreicht seine Endlage, wenn der Schalthebel die jeweilige Tip-Schaltstellung einnimmt. Die begrenzte lineare Verschiebung der Schaltglieder ermöglicht eine platzsparende Anordnung der Schaltglieder.

Zweckmäßigerweise erfolgt bei einer Beaufschlagung des Betätigungselementes des Warnlichtschalters gleichzeitig eine lineare Verschiebung beider Schaltglieder. Die rechte und die linke Fahrtrichtungsanzeige werden zugleich angesteuert.

Vorzugsweise ist dem Schalthebel des Blinkerschalters zur Umformung seiner Schwenkbewegung in eine Linearbewegung des entsprechenden Schaltgliedes eine mechanische Umlenkeinrichtung zugeordnet. Die Umlenkeinrichtung zwischen den Schaitgliedern ist schwenkbar gehäuseseitig gelagert und weist zwei kreisbogenförmige Betätigungsarme auf, wobei jeweils ein Betätigungsarm auf ein zugeordnetes Schaltglied wirkt. Die einen geringen Platzbedarf beanspruchende Umlenkeinrichtung kann bei hinreichender Stabilität und Funktionalität im Spritzgußverfahren aus Kunststoff gefertigt werden. Selbstverständlich können als Umlenkeinrichtung auch entsprechende am Schalthebel angeformte Gabeln in Betracht kommen, die auf das jeweilige Schaltglied wirken. Im weiteren ist auch die Anordnung eines Getriebes o.ä. als Umlenkeinrichtung zwischen dem Schalthebel und den Schaltgliedern möglich.

Bei einer vorteilhaften Ausführung der Erfindung beaufschlagt das Betätigungselement des Warnlichtschalters über eine Nokkenstange die Schaltglieder. Das Betätigungselement und die Nockenstange können einteilig ausgeführt werden.

Nach einer Weiterbildung des Erfindungsgegenstandes ist jedes der Schaltglieder rechteckförmig ausgebildet und auf der der Umlenkeinrichtung bzw. der Nockenstange zugeordneten Stirnseite mit einem mittig angeordneten, sich in den Bereich der Umlenkeinrichtung bzw. der Nockenstange erstreckenden Dom versehen, der von der Umlenkeinrichtung bzw. einem entsprechenden Nocken der Nockenstange beaufschlagbar ist. Das Einwirken der Umlenkeinrichtung bzw. der Nockenstange auf den Dom des zugehörigen Schaltgliedes bewirkt eine zuverlässige Umformung der unterschiedlichen Bewegungsrichtungen ohne zusätzliche Einzelteile, da der Dom an dem Schaltglied angeformt ist und in jeder Stellung des Schaltgliedes die gleiche Angriffsfläche für die Umlenkeinrichtung bzw. die Nockenstange bietet.

Um eine Rückstellung der Schaltglieder aus einer beliebigen Schaltstellung in die "Aus"-Schaltstellung auf einfache Weise zu erreichen, weist ein Träger der Schaltkontaktbahnen im stirnseitigen Bereich jedes Schaltgliedes eine Aufnahme für eine Druckfeder auf, die zwischen dem Träger und dem zugeordneten Schaltglied wirkt.

Zur Vermeidung von Kriechstrom während der Verschiebung der Schaltglieder weist der Träger bereichsweise die Schaltkontaktbahnen seitlich begrenzende Rampen auf, die mit seitlichen Anformungen an Kontaktarmen der Schaltglieder derart zusammenwirken, daß bei einer Verschiebung der Schaltglieder die Kontaktarme von den Schaltkontaktbahnen abheben. Eine saubere Kontaktierung der Kontaktarme auf den Schaltkontaktbahnen ist sonach gewährleistet.

Alternativ ist zur Vermeidung von Kriechstrom während der Verschiebung der Schaltglieder der Träger bereichsweise mit den Schaltkontaktbahnen unterbrechenden Rampen versehen, wobei die Rampen im Zusammenwirken mit V-förmigen Abwinklungen der Kontaktarme ein Abheben derselben von den Schaltkontaktbahnen bewirken.

Bevorzugt umfaßt jedes der Schaltglieder drei die Schaltkontaktbahnen beaufschlagende, als Blattfedern ausgebildete Kontaktarme, die jeweils mit einem Ende an einer Stirnseite eines das Schaltglied begrenzenden Rahmens festgelegt sind. Sonach kann jedes Schaltglied drei Strompfade gleichzeitig öffnen bzw. schließen. Die Festlegung der Kontaktarme innerhalb des Rahmens des Schaltgliedes erfolgt während dessen Fertigung als Spritzgußteil.

Zweckmäßigerweise weist das freie Ende jedes Kontaktarmes beidseitig die seitliche Anformung auf. Aufgrund dieser Maßnahme wirken die Rampen des Trägers im unmittelbaren Bereich der Kontaktierung und gewährleisten ein zuverlässiges Abheben des Kontaktarmes während der Verschiebung des Schaltgliedes von der Schaltkontaktbahn. Um ein reibungsarmes Gleiten der Anformungen auf den Rampen sicherzustellen, sind die seitlichen Anformungen der Kontaktarme V-förmig ausgebildet, wobei die Spitzen mit den Rampen zusammenwirken.

Alternativ ist das freie Ende jedes Kontaktarmes mit einer Z-förmigen Abwinklung zur Beaufschlagung der zugeordneten Schaltkontaktbahn sowie der sich daran anschließenden V-förmigen Abwinklung versehen ist, wobei der obere Schenkel der Z-förmigen Abwinklung die Rampe des Trägers übergreift, der untere Schenkel in einem Abschnitt der Schaltkontaktbahn und die Spitze der V-förmigen Abwinklung in einem anderen Bereich der Schaltkontaktbahn aufliegt. Sonach überspannen der obere Schenkel und der Steg der Z-förmigen Abwinklung die Rampe des Trägers brückenförmig, wobei die V-förmige Abwinklung bei einer Verschiebung des Schaltgliedes über die Rampe gleitet und zusammen mit dem unteren Schenkel der Z-förmigen Abwinklung die Schaltkontaktbahn kontaktiert.

Um eine zuverlässige Führung der Schaltglieder bei deren linearer Verschiebung sicherzustellen, weist vorzugsweise der Rahmen jedes Schaltgliedes auf jeder Längsseite nach außen gerichtete Führungsansätze auf, die mit korrespondierenden Führungsnuten des Trägers der Schaltkontaktbahnen zusammenwirken.

In einer kostengünstigen Ausgestaltung sind bevorzugt die Schaltkontaktbahnen als Stanzgitter ausgebildet.

Die Erfindung wird im folgenden anhand mehrerer Ausführungsbeispiele unter Bezugnahme auf die zugehörigen Zeichnungen näher erläutert. Es zeigen:

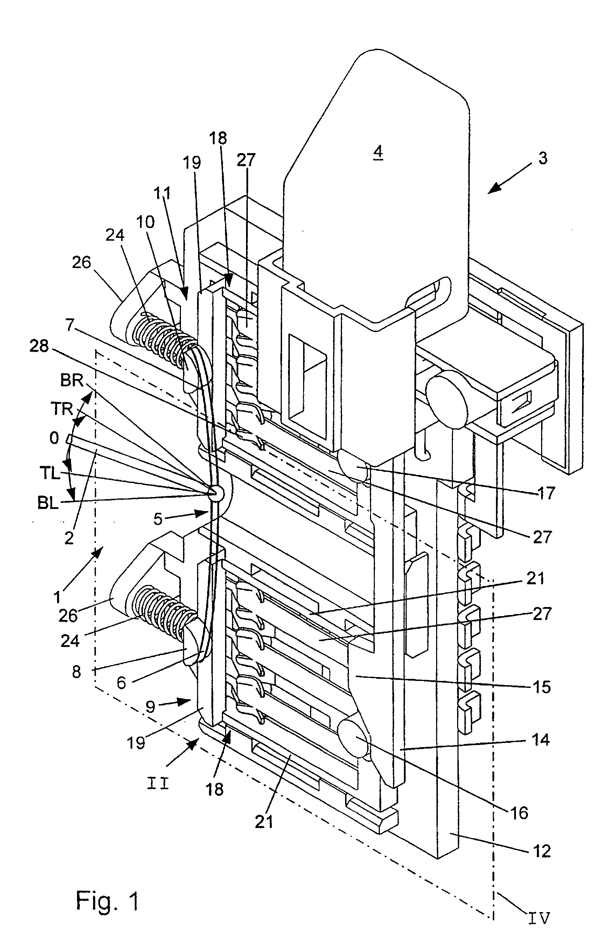

- **Fig.1**: eine perspektivische Darstellung der Funktionselemente eines erfindungsgemäßen Lenkstockschalters,

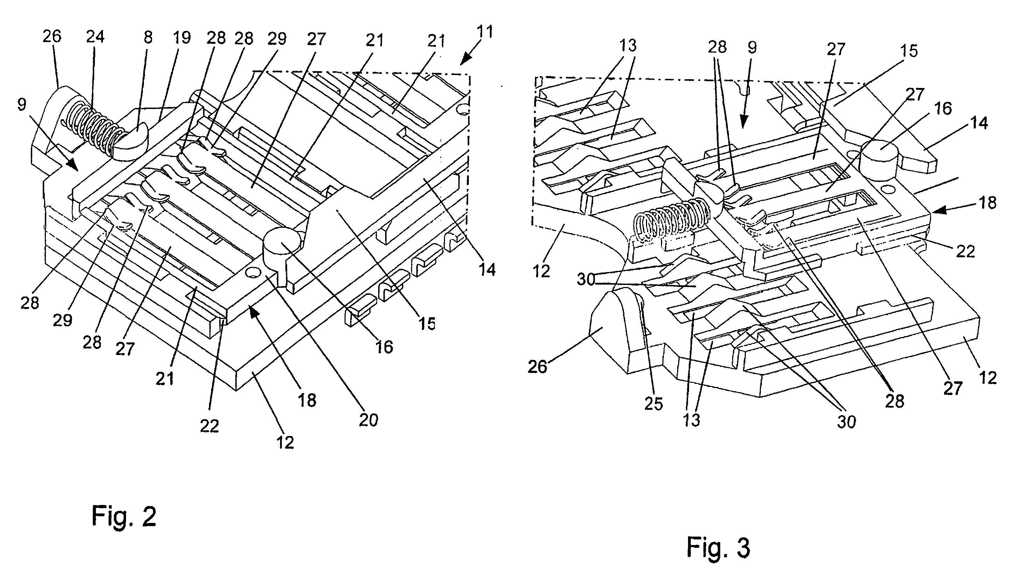

- **Fig.2**: eine Darstellung der Einzelheit II gemäß Fig. 1 in einer ersten Ausgestaltung,
- **Fig.3**: eine Explosionsdarstellung gemäß Fig. 2,

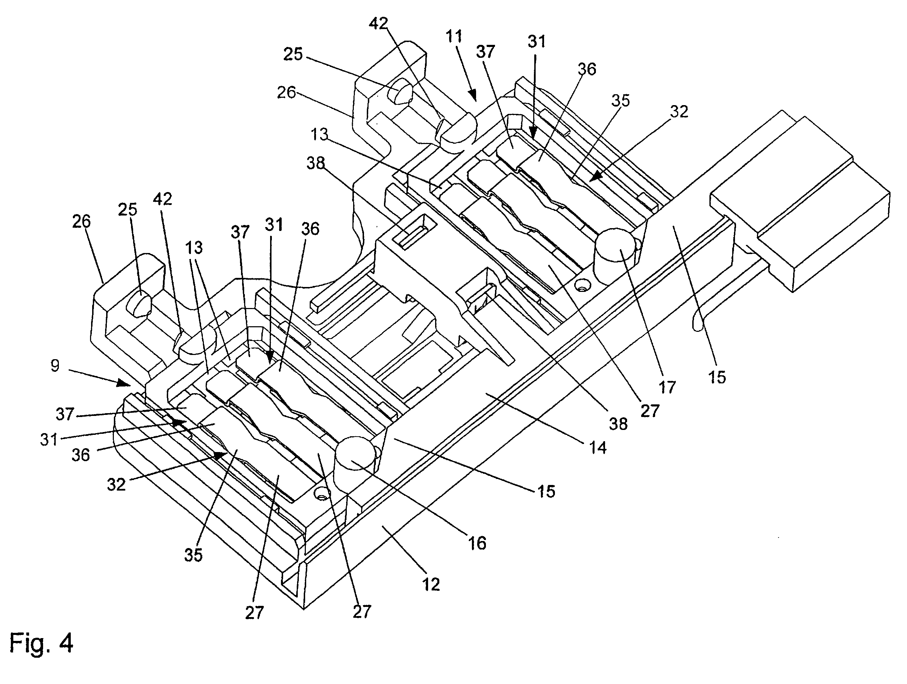

- **Fig.4**: eine teilweise Darstellung gemäß Fig. 1 in Richtung des Pfeiles IV in einer zweiten Ausgestaltung,

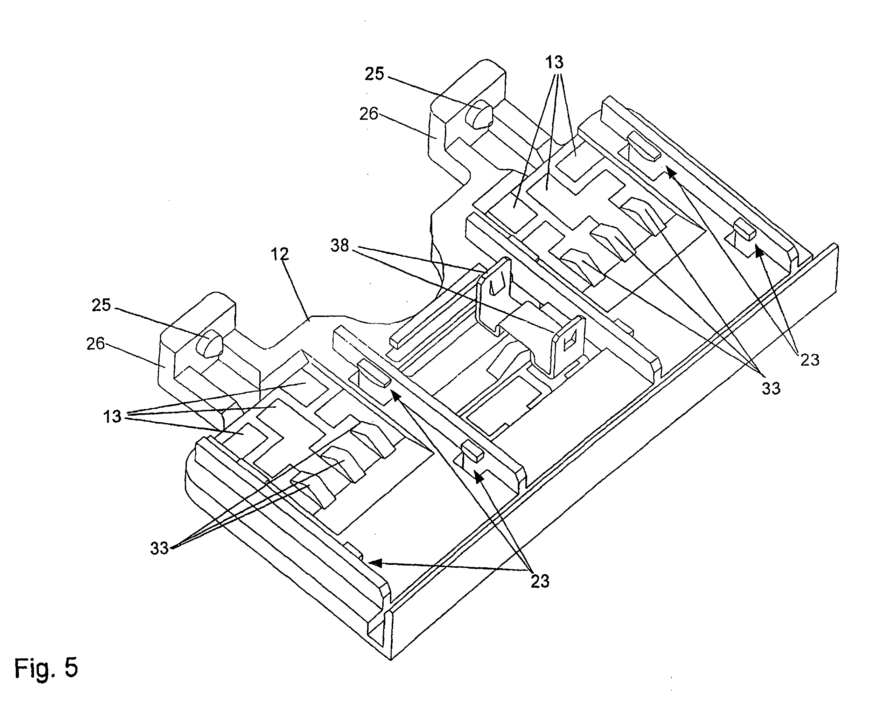

- **Fig.5**: eine weitere teilweise Darstellung gemäß Fig. 1 in Richtung des Pfeiles IV in einer zweiten Ausgestaltung,
- **Fig.6**: eine Darstellung der Schaltkontaktbahnen des Lenkstockschalters, und
- **Fig.7**: eine Darstellung des Schaltplanes des Lenkstockschalters.

Der Lenkstockschalter eines Kraftfahrzeuges umfaßt einen Blinkerschalter 1, dessen verschwenkbarer, schematisch dargestellter Schalthebel 2 seitlich angeordnet ist, und einen nach oben ausgerichteten Warnlichtschalter 3 mit einem zugehörigen Betätigungselement 4.

Zur Aktivierung einer Fahrtrichtungsanzeige wird der Schalthebel 2 des Blinkerschalters 1 aus der "Aus"-Schaltstellung 0 verschwenkt. Die Schaltstellungen des Schalthebels 2 bei der Schwenkbewegung nach oben sind eine Tip-Schaltstellung TR für getastetes Blinken nach rechts sowie eine nachfolgende Blinker-Schaltsteliung BR für gerastetes Blinken nach rechts. Die Schaltstellungen des Schalthebels 2 bei der Schwenkbewegung nach unten sind analog zu der Schwenkbewegung nach oben eine Tip-Schaltstellung TL sowie eine Blinker-Schaltstellung BL für das Blinken nach links.

Dem Schalthebel 2 des Blinkerschalters 1 ist eine schematisch dargestellte Umlenkeinrichtung 5 mit zwei kreisbogenförmigen Betätigungsarmen 6, 7 zugeordnet. Der Betätigungsarm 6 wirkt auf einen Dom 8 eines Schaltgliedes 9 zur Ansteuerung der Fahrtrichtungsänderung nach links und der Betätigungsarm 7 beaufschlagt einen Dom 10 eines Schaltgliedes 11 zur Fahrtrichtungsänderung nach rechts. Die Schaltglieder 9, 11 führen eine Linearbewegung auf einem Träger 12 aus, der den Schaltgliedern 9, 11 zugeordnete Schaltkontaktbahnen 13 aufnimmt. Die zwischen den Schaltgliedern 9, 11 gehäuseseitig, schwenkbar gelagerte Umlenkeinrichtung 5 dient sonach zur Umformung der Schwenkbewegung des Schalthebels 2 des Blinkerschalters 1 in eine Linearbewegung der Schaltglieder 9, 11.

Das Betätigungselement 4 des Warnlichtschalters 3 weist eine Nockenstange 14 auf, deren Nocken 15 auf Dome 16, 17 der Schaltglieder 9, 11 wirken. Bei einer Beaufschlagung des Betätigungselementes 4 erfolgt eine von den Nocken 15 bewirkte lineare Verschiebung beider Schaltglieder 9, 11, wonach diese sich in den verrasteten Schaltstellungen analog den Blinker-Schaltstellungen BR und BL befinden, so daß eine gleichzeitige Ansteuerung der rechten und linken Fahrtrichtungsanzeige erfolgt.

Jedes Schaltglied 9, 11 ist rechteckförmig ausgebildet und von einem Rahmen 18 begrenzt. Die Dome 8, 10 der einen Stirnseite 19 der Rahmen 18 der Schaltglieder 9, 11 sind der Umlenkeinrichtung 5 des Blinkerschalters 1 und die Dome 16, 17 der anderen Stirnseite 20 sind der Nockenstange 14 des Warnlichtschalters 3 zugeordnet. Zur Sicherstellung der Linearbewegung der Schaltglieder 9, 11 sind auf den Längsseiten 21 des Rahmens 18 jedes Schaltgliedes 9 bzw. 11 Führungsansätze 22 angeformt, die mit korrespondierenden Führungsnuten 23 des Trägers 12 der Schaltkontaktbahnen 13 zusammenwirken.

Die Rückstellung jedes Schaltgliedes 9 bzw. 11 aus den Tip-Schaltstellungen TR, TL sowie aus den Blinker-Schaltstellungen BR, BL erfolgt mittels einer Druckfeder 24, die zwischen dem Träger 12 und dem jeweiligen Schaltglied 9 bzw. 11 wirkt. Jede Druckfeder 24 ist zwischen einer winkelförmigen, mit einer Nase 25 versehenen Aufnahme 26 des Trägers 12 und einem an der Stirnseite 19 des Schaltgliedes 9 bzw. 11 angeformten Dorn 42 fixiert, wobei die Nase 25 und der Dorn 42 in den Innendurchmesser der Druckfeder 24 eingreifen.

Zur Kontaktierung der Schaltkontaktbahnen 13 umfaßt jedes der Schaltglieder 9 bzw. 11 drei als Blattfedern ausgebildete Kontaktarme 27, die jeweils mit einem Ende an der Stirnseite 20 des das entsprechende Schaltglied 9 bzw. 11 begrenzenden Rahmens 18 festgelegt sind.

In einer ersten Ausgestaltung weist das freie Ende jedes Kontaktarmes 27 beidseitig eine seitliche Anformung 28 auf, die V-förmig ausgebildet ist. Die Spitzen 29 der V-förmigen Anformungen 28 wirken mit Rampen 30 des Trägers 12 zusammen, die die Schaltkontaktbahnen 13 bereichsweise seitlich begrenzen.

In einer zweiten Ausgestaltung ist das freie Ende jedes Kontaktarmes 27 mit einer Z-förmigen Abwinklung 31 versehen, an die sich eine V-förmige Abwinklung 32 anschließt. Die V-förmige Abwinklung 32 wirkt mit einer Rampe 33 des Trägers 12 zusammen, die bereichsweise die zugeordnete Schaltkontaktbahn 13 unterbricht. In der Schaltstellung des Schaltgliedes 9 bzw. 11, die der "Aus"-Schaltstellung 0 des Blinkerschalters 1 entspricht, befindet sich die Rampe 33 zwischen dem Steg 34 der Z-förmigen Abwinklung 31 und der Spitze 35 der V-förmigen Abwinklung 32. Der obere Schenkel 36 der Z-förmigen Abwinklung 31 übergreift in dieser Schaltstellung die Rampe 33, während der untere Schenkel 37 die zugeordnete Schaltkontaktbahn 13 kontaktiert.

Bei einer linearen Verschiebung eines bzw. beider Schaltglieder 9, 11, die nach der Betätigung des Blinkerschalters 1 oder des Warnlichtschalters 3 erfolgt, bewirken die Rampen 30, 33 in Verbindung mit den Anformungen 28 oder den V-förmigen Abwinklungen 32 der Kontaktarme 27 ein Abheben derselben, wodurch Kriechströme vermieden werden.

Bei einer gleichzeitigen Ausbildung der Fahrtrichtungsanzeigen am Heck eines Kraftfahrzeuges als Bremsleuchten ist es unabdingbar, das Aufleuchten der Bremsleuchten bei der Betätigung der Bremse zu verhindern, wenn gleichzeitig der Blinkerschalter 1 oder der Warnlichtschalter 3 betätigt ist und hierbei die entsprechende Bremsleuchte als blinkende Fahrtrichtungsanzeige dient oder die Bremsleuchten als blinkende Warnlichtanlage dienen. Aus diesem Grund sind den Schaltkontaktbahnen 13 Kontakte 38 zugeordnet, die entsprechende Strompfade öffnen bzw. schließen.

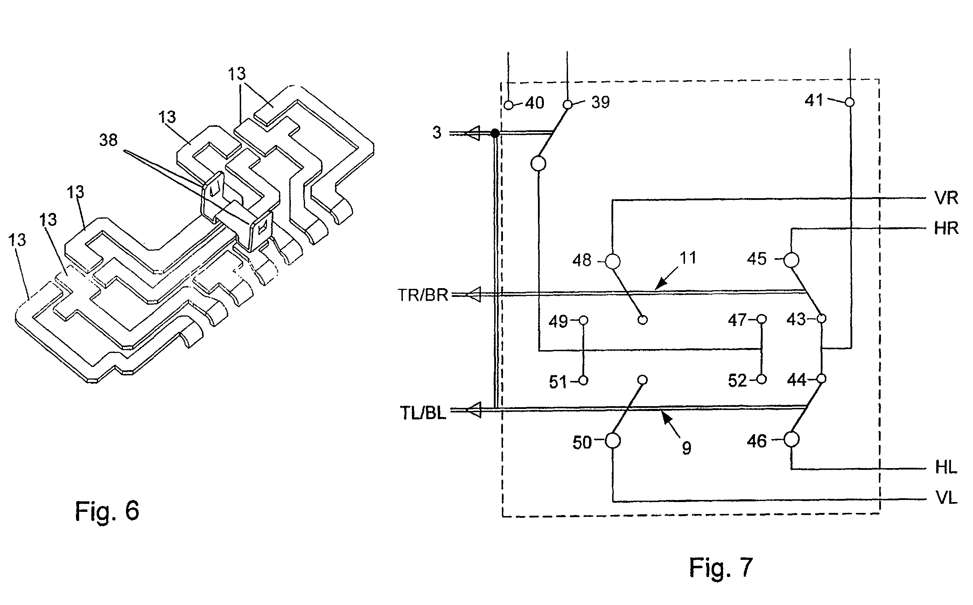

Der elektrische Aufbau des Lenkstockschalters unter der Verwendung der Bremsleuchten als hintere Fahrtrichtungsanzeigen ist in dem Schaltbild nach Fig. 7 verdeutlicht, wobei sich die Schaltglieder 9, 11 in der "AUS"-Schaltstellung 0 befinden. Eine Verbindung zum Bordnetz ist mittels Kontakten 39, 40 hergestellt. Bei eingeschalteter Zündung des Kraftfahrzeuges erfolgt die Spannungsversorgung über den Kontakt 39 und bei ausgeschalteter Zündung sowie der Betätigung des Warnlichtschalters 3 erfolgt die Spannungseinleitung über den Kontakt 40. An einen Kontakt 41 ist eine Verbindungsleitung zu dem Bremslichtschalter des Kraftfahrzeuges angeschlossen, die über die Verbindungen der Kontakte 43 und 44 mit einem Kontakt 45 für die hintere rechte Fahrtrichtungsanzeige HR und einem Kontakt 46 für die hintere linke Fahrtrichtungsanzeige HL gekoppelt ist.

Durch das Verschwenken des Schalthebels 2 des Blinkerschalters 1 nach oben in die Tip-Schaltstellung TR oder die Blinker-Schaltstellung BR erfolgt das Verschieben des Schaltgliedes 11. Der Kontakt 45 wird mit einem Kontakt 47 in Verbindung gebracht, gleichzeitig wird ein Kontakt 48 für die vordere rechte Fahrtrichtungsanzeige VR mit einem Kontakt 49 verbunden, wonach die rechten Fahrtrichtungsanzeigen VR und HR blinken. Analog führt das Verschwenken des Schalthebels 2 nach unten zur Verschiebung des Schaltgliedes 9 und damit zur blinkenden Ansteuerung der vorderen linken Fahrtrichtungsanzeige VL durch die Verbindung eines Kontaktes 50 mit einem Kontakt 51 sowie der Kopplung des Kontaktes 46 für die hintere linke Fahrtrichtungsanzeige HL mit einem Kontakt 52. Die Kontakte 43 und 44, an die der Kontakt 41 für das Bremslicht angeschlossen ist, sind in diesen Schaltstellungen nicht beschaltet.

Die Betätigung des Warnlichtschalters 3 führt zur gleichzeitigen Verschiebung der Schaltglieder 9, 11 und hat das Blinken aller Fahrtrichtungsanzeigen VR, HR, VL, HL durch die bereits erläuterten Schaltvorgänge zur Folge.

## Patentansprüche

1. Lenkstockschalter eines Kraftfahrzeuges mit einem Blinkerschalter (1), dessen Schalthebel (2) zwei, Schaltkontaktbahnen (13) beaufschlagende Schaltglieder (9, 11)fürjeweilseineFahrtrichtungsanzeige nach rechts oder nach links zugeordnet sind, und einem Warnlichtschalter(3) mit einem Betätigungselement (4), **dadurch gekennzeichnet, daß** das Betätigungselement (4) des Warnlichtschalters (3) bei dessen Betätigung mit den Schaltgliedern (9, 11) des Blinkerschalters (1) zur gleichzeitigen Ansteuerung der rechten und linken Fahrtrichtungsanzeige mechanisch in Verbindung tritt.

2. Lenkstockschalter nach Anspruch 1, **dadurch gekennzeichnet, daß** die rechte und die linke Fahrtrichtungsanzeige am Heck des Kraftfahrzeuges gleichzeitig als Bremsleuchten ausgebildet sind.

3. Lenkstockschalter nach Anspruch 1, **dadurch gekennzeichnet, daß** durch ein Verschwenken des Schalthebels (2) des Blinkerschalters (1) aus der "AUS"-Schaltstellung (0) nach oben oder nach unten in eine Tip-Schaltstellung (TR, TL) sowie eine nachfolgende Blinker-Schaltstellung (BR, BL) ein lineares Verschieben des einen oder des anderen Schaltgliedes (9, 11) zur Ansteuerung der rechten oder der linken Fahrtrichtungsanzeige erfolgt.

4. Lenkstockschalter nach Anspruch 1, **dadurch gekennzeichnet, daß** bei einer Beaufschlagung des Betätigungselementes (4) des Warnlichtschalters (3) gleichzeitig eine lineare Verschiebung beider Schaltglieder (9, 11) erfolgt.

5. Lenkstockschalter nach den Ansprüchen 1 und 3, **dadurch gekennzeichnet, daß** dem Schalthebel (2) des Blinkerschalters (1) zur Umformung seiner Schwenkbewegung in eine Linearbewegung des entsprechenden Schaltgliedes (9, 11) eine mechanische Umlenkeinrichtung (5) zugeordnet ist.

6. Lenkstockschalter nach Anspruch 5, **dadurch gekennzeichnet, daß** die Umlenkeinrichtung (5) zwischen den Schaltgliedern (9, 11) schwenkbar gehäuseseitig gelagert ist und zwei kreisbogenförmige Betätigungsarme (6, 7) aufweist, wobei jeweils ein Betätigungsarm (6, 7) auf ein zugeordnetes Schaltglied (9, 11) wirkt.

7. Lenkstockschalter nach den Ansprüchen 1 und 4, **dadurch gekennzeichnet, daß** das Betätigungselement (4) des Warnlichtschalters (3) über eine Nockenstange (14) die Schaltglieder (9, 11) beaufschlagt.

8. Lenkstockschalter nach einem der Ansprüche 1 bis 7, **dadurch gekennzeichnet, daß** jedes der Schaltglieder (9, 11) rechteckförmig ausgebildet ist und auf der der Umlenkeinrichtung (5) bzw. der Nokkenstange (14) zugeordneten Stirnseite (19, 20) mit einem mittig angeordneten, sich in den Bereich der Umlenkeinrichtung (5) bzw. der Nockenstange (14) erstreckenden Dom (8, 10, 16, 17) versehen ist, der von der Umlenkeinrichtung (5) bzw. einem entsprechenden Nocken (15) der Nockenstange (14) beaufschlagbar ist.

9. Lenkstockschalter nach einem der Ansprüche 1 bis 8, **dadurch gekennzeichnet, daß** ein Träger (12) der Schaltkontaktbahnen (13) im stirnseitigen Bereich jedes Schaltgliedes (9, 11) eine Aufnahme (26) für eine Druckfeder (24) aufweist, die zwischen dem Träger (12) und dem zugeordneten Schaltglied (9, 11) wirkt.

10. Lenkstockschalter nach Anspruch 9, **dadurch gekennzeichnet, daß** der Träger (12) bereichsweise die Schaltkontaktbahnen (13) seitlich begrenzende Rampen (30) aufweist, die mit seitlichen Anformungen (28) an Kontaktarmen (27) der Schaltglieder (9, 11) derart zusammenwirken, daß bei einer Verschiebung der Schaltglieder (9, 11) die Kontaktarme (27) von den Schaltkontaktbahnen (13) abheben.

11. Lenkstockschalter nach Anspruch 9, **dadurch gekennzeichnet, daß** der Träger (12) bereichsweise mit die Schaltkontaktbahnen (13) unterbrechenden Rampen (33) versehen ist, wobei die Rampen (33) im Zusammenwirken mit V-förmigen Abwinklungen (32) der Kontaktarme (27) ein Abheben derselben von den Schaltkontaktbahnen (13) bewirken.

12. Lenkstockschalter nach einem der Ansprüche 1 bis 11, **dadurch gekennzeichnet, daß** jedes der Schaltglieder (9, 11) drei die Schaltkontaktbahnen (13) beaufschlagende, als Blattfedern ausgebildete Kontaktarme (27) umfaßt, die jeweils mit einem Ende an einer Stirnseite (20) eines das Schaltglied (9, 11) begrenzenden Rahmens (18) festgelegt sind.

13. Lenkstockschalter nach den Ansprüchen 10 und 12, **dadurch gekennzeichnet, daß** das freie Ende jedes Kontaktarmes (27) beidseitig die seitliche Anformung (28) aufweist.

14. Lenkstockschalter nach Anspruch 13, **dadurch gekennzeichnet, daß** die seitlichen Anformungen (28) der Kontaktarme (27) V-förmig ausgebildet sind, wobei die Spitzen (29) mit den Rampen (30) zusammenwirken.

15. Lenkstockschalter nach den Ansprüchen 11 und 12, **dadurch gekennzeichnet, daß** das freie Ende jedes Kontaktarmes (27) mit einer Z-förmigen Abwinklung (31) zur Beaufschlagung der zugeordneten Schaltkontaktbahn (13) sowie der sich daran anschließenden V-förmigen Abwinklung (32) versehen ist, wobei der obere Schenkel (36) der Z-förmigen Abwinklung (31) die Rampe (33) des Trägers (12) übergreift, der untere Schenkel (37) in einem Abschnitt der Schaltkontaktbahn (13) und die Spitze (35) der V-förmigen Abwinklung (32) in einem anderen Bereich der Schaltkontaktbahn (13) aufliegt.

16. Lenkstockschalter nach Anspruch 12, **dadurch gekennzeichnet, daß** der Rahmen (13) jedes Schaltgliedes (9, 11) auf jeder Längsseite (21) nach außen gerichtete Führungsansätze (22) aufweist, die mit korrespondierenden Führungsnuten (23) des Trägers (12) der Schaltkontaktbahnen (13) zusammenwirken.

17. Lenkstockschalter nach einem der Ansprüche 1 bis 16, **dadurch gekennzeichnet, daß** die Schaltkontaktbahnen (13) als Stanzgitter ausgebildet sind.

## Claims

1. Steering column switch for an automotive vehicle, having a flasher switch (1), the switching lever (2) of which has associated therewith two switching members (9, 11) which act on switching contact paths (13), for indicating a respective travel direction to the right or to the left, and a warning light switch (3) provided with an actuating element (4), **characterised in that** the actuating element (4) of the warning light switch (3), when the latter is actuated, communicates mechanically with the switching members (9, 11) of the flasher switch (1) for simultaneously triggering the right and left travel direction indicators.

2. Steering column switch according to claim 1, **characterised in that** the right and left travel direction indicators at the rear of the automotive vehicle are simultaneously configured as brake lights.

3. Steering column switch according to claim 1, **characterised in that** a linear displacement of one or other switching member (9, 11) for triggering the right or left travel direction indicator is effected by pivoting the switching lever (2) of the flasher switch (1) from the "OFF" switching position (0) upwardly or downwardly into a "tip" switching position (TR, TL) as well as into a subsequent flasher switching position (BR, BL).

4. Steering column switch according to claim 1, **characterised in that**, when the actuating element (4) of the warning light switch (3) is actuated, a linear displacement of both switching members (9, 11) is simultaneously effected.

5. Steering column switch according to claims 1 and 3, **characterised in that** a mechanical deflector (5) is associated with the switching lever (2) of the flasher switch (1) for converting its pivotal movement into a linear movement of the corresponding switching member (9, 11).

6. Steering column switch according to claim 5, **characterised in that** the deflector (5) is pivotably mounted on the housing side between the switching members (9, 11) and includes two arcuate actuating arms (6, 7), each actuating arm (6, 7) acting upon an associated switching member (9, 11).

7. Steering column switch according to claims 1 and 4, **characterised in that** the actuating element (4) of the warning light switch (3) acts on the switching members (9, 11) via a cam rod (14).

8. Steering column switch according to one of claims 1 to 7, **characterised in that** each of the switching members (9, 11) has a rectangular configuration and is provided, on the end face (19, 20) associated with the deflector (5) or respectively the cam rod (14), with a centrally disposed dome (8, 10, 16, 17), which extends into the region of the deflector (5) or respectively of the cam rod (14) and is acted upon by the deflector (5) or respectively by a corresponding cam (15) of the cam rod (14).

9. Steering column switch according to one of claims 1 to 8, **characterised in that** a carrier (12) of the switching contact paths (13) in the end-face region of each switching member (9, 11) includes a receiver (26) for a compression spring (24), which acts between the carrier (12) and the associated switching member (9, 11).

10. Steering column switch according to claim 9, **characterised in that** the carrier (12) includes ramps (30), which laterally define the switching contact paths (13) in certain regions and co-operate with lateral projections (28) on contact arms (27) of the switching members (9, 11) in such a manner that, during a displacement of the switching members (9, 11), the contact arms (27) rise from the switching contact paths (13).

11. Steering column switch according to claim 9, **characterised in that** the carrier (12) is provided in certain regions with ramps (33) which interrupt the switching contact paths (13), the ramps (33), in co-operation with V-shaped angular portions (32) of the contact arms (27), causing said arms to rise from the switching contact paths (13).

12. Steering column switch according to one of claims 1 to 11, **characterised in that** each of the switching members (9, 11) includes three contact arms (27), which act on the switching contact paths (13) and are in the form of leaf springs, said arms being each secured by one end on an end face (20) of a frame (18), which defines the switching member (9, 11).

13. Steering column switch according to claims 10 and 12, **characterised in that** the free end of each contact arm (27) has the lateral projection (28) on both sides.

14. Steering column switch according to claim 13, **characterised in that** the lateral projections (28) of the contact arms (27) are V-shaped, the apexes (27) co-operating with the ramps (30).

15. Steering column switch according to claims 11 and 12, **characterised in that** the free end of each contact arm (27) is provided with a Z-shaped angular portion (31) for acting on the associated switching contact path (13) and the V-shaped angular portion (32) communicating therewith, the upper portion (36) of the Z-shaped angular portion (31) engaging over the ramp (33) of the carrier (12), the lower portion (37) lying in a portion of the switching contact path (13), and the apex (35) of the V-shaped angular portion (32) lying in a different region of the switching contact path (13).

16. Steering column switch according to claim 12, **characterised in that** the frame (13) of each switching member (9, 11) has, on each longitudinal side (21), outwardly orientated guide extensions (22) which co-operate with corresponding guide grooves (23) in the carrier (12) of the switching contact paths (13).

17. Steering column switch according to one of claims 1 to 16, **characterised in that** the switching contact paths (13) are in the form of stamped lattices.

## Revendications

1. Commutateur de colonne de direction d'un véhicule automobile comportant un commutateur de clignotant (1), au levier de commande (2) duquel sont associés deux organes de commande (9, 11), agissant sur des pistes de contact de commande (13), pour respectivement une indication de la direction de marche vers la droite ou vers la gauche, et un interrupteur de feux de détresse (3) avec un élément d'actionnement (4), **caractérisé en ce que** l'élément d'actionnement (4) de l'interrupteur des feux de détresse (3) vient mécaniquement en liaison, lors de son actionnement, avec les organes de commande (9, 11) du commutateur de clignotant (1), pour la commande simultanée de l'indication de la direction de marche droite et gauche.

2. Commutateur de colonne de direction selon la revendication 1, **caractérisé en ce que** l'indication droite et gauche de la direction de marche à l'arrière du véhicule automobile est réalisée en même temps en tant que feux de stop.

3. Commutateur de colonne de direction selon la revendication 1, **caractérisé en ce que** par un pivotement du levier de commande (2) de l'interrupteur de clignotant (1) depuis la position "arrêt" (0) vers le haut ou vers le bas dans une position de commande par impulsions (TR, TL), ainsi qu'une position de commande du clignotant (BR, BL) suivante, il se produit un coulissement linéaire de l'un ou de l'autre organe de commande (9, 11), pour la commande de l'indication droite ou gauche de la direction de marche.

4. Commutateur de colonne de direction selon la revendication 1, **caractérisé en ce que** lorsqu'on agit sur l'élément d'actionnement (4) de l'interrupteur de feux de détresse (3), il se produit en même temps un coulissement linéaire de deux organes de commande (9, 11).

5. Commutateur de colonne de direction selon les revendications 1 et 3, **caractérisé en ce qu'**au levier de commande (2) du commutateur de clignotant (1) est associé un dispositif de déviation (5) mécanique, pour transformer son mouvement de pivotement en un mouvement linéaire de l'organe de commande (9, 11) correspondant.

6. Commutateur de colonne de direction selon la revendication 5, **caractérisé en ce que** le dispositif de déviation (5) est monté à pivotement latéralement au boîtier entre les organes de commande (9, 11), et comporte deux bras d'actionnement (6, 7) en forme d'arc de cercle, chaque bras d'actionnement (6, 7) agissant sur un organe de commande (9, 11) associé.

7. Commutateur de colonne de direction selon les revendications 1 et 4, **caractérisé en ce que** l'élément d'actionnement (4) de l'interrupteur de feux de détresse (3) agit sur les organes de commande (9, 11) par l'intermédiaire d'une tige à came (14).

8. Commutateur de colonne de direction selon l'une des revendications 1 à 7, **caractérisé en ce que** chacun des organes de commande (9, 11) est réalisé en forme de rectangle et est pourvu, sur le côté frontal (19, 20) associé au dispositif de déviation (5) ou à la tige à came (14), d'un dôme (8, 10, 16, 17) disposé au milieu, s'étendant dans la zone du dispositif de déviation (5) ou de la tige à came (14), lequel dôme est sollicité par le dispositif de déviation (5) ou par une came correspondante (15) de la tige à came (14).

9. Commutateur de colonne de direction selon l'une des revendications 1 à 8, **caractérisé en ce qu'**un support (12) des pistes de contact de commande (13) dans la zone frontale de chaque organe de commande (9, 11) comporte un logement (26) à ressort de compression (24) qui agit entre le support (12) et l'organe de commande (9, 11) associé.

10. Commutateur de colonne de direction selon la revendication 9, **caractérisé en ce que** le support (12) présente par endroits des rampes (30), limitant latéralement les pistes de contact de commande (13) et qui coopèrent avec des préformes latérales (28) sur des bras de contact (27) des organes de commande (9, 11), de manière que pendant un coulissement des organes de commande (9, 11), les bras de contact (27) se soulèvent des pistes de contact de commande (13).

11. Commutateur de colonne de direction selon la revendication 9, **caractérisé en ce que** le support (12) est pourvu par endroits de rampes (33) qui interrompent les pistes de contact de commande (13), les rampes (33) provoquant, en coopération avec des parties coudées (32) en V des bras de contact (27), un soulèvement de ceux-ci par rapport aux pistes de contact de commande (13).

12. Commutateur de colonne de direction selon l'une des revendications 1 à 11, **caractérisé en ce que** chacun des organes de commande (9, 11) comprend trois bras de contact (27) conformés en des ressorts à lame, agissant sur les pistes de contact de commande (13), qui sont fixés chacun par une extrémité à un côté frontal (20) d'un cadre (18) délimitant l'organe de commande (9, 11).

13. Commutateur de colonne de direction selon les revendications 10 et 12, **caractérisé en ce que** l'extrémité libre de chaque bras de contact (27) présente, des deux côtés, la préforme latérale (28).

14. Commutateur de colonne de direction selon la revendication 13, **caractérisé en ce que** les préformes latérales (28) des bras de contact (27) sont en forme de V, les sommets (29) coopérant avec les rampes (30).

15. Commutateur de colonne de direction selon les revendications 11 et 12, **caractérisé en ce que** l'extrémité libre de chaque bras de contact (27) est pourvue d'une partie coudée (31) en Z pour agir sur la piste de contact de commande (13) associée, ainsi que sur la partie coudée (32) en V attenante, la branche supérieure (36) de la partie coudée (31) en Z passant sur la rampe (33) du support (12), la branche inférieure (37) reposant dans un tronçon de la piste de contact de commande (13) et le sommet (35) de la partie coudée (32) en V dans une autre zone de la piste de contact de commande (13).

16. Commutateur de colonne de direction selon la revendication 12, **caractérisé en ce que** le cadre (13) de chaque organe de commande (9, 11) présente, sur chaque côté longitudinal (21), des appendices de guidage (22), orientés vers l'extérieur, qui coopèrent avec des rainures de guidage (3) correspondantes du support (12) des pistes de contact de commande (13).

17. Commutateur de colonne de direction selon l'une des revendications 1 à 16, **caractérisé en ce que** les pistes de contact de commande (13) sont réalisées sous la forme d'une grille estampée.
